# EUROPÄISCHE PATENTSCHRIFT

(11) **EP 4 010 166 B1**
(45) Veröffentlichungstag und Bekanntmachung des Hinweises auf die Patenterteilung: **28.08.2024**
(21) Anmeldenummer: 20757226.4
(22) Anmeldetag: 31.07.2020
(51) Int. Cl.: B29C 48/495, B29C 48/71, B29C 48/36, B29C 49/22, B29C 48/70, B29C 49/04, B29C 48/21

(54) **SCHMELZEVERTEILER**
MELT DISTRIBUTOR
DISTRIBUTEUR DE MATIÈRE FONDUE

(30) Priorität: 06.08.2019 DE 102019121172; 15.10.2019 DE 102019127661
(43) Veröffentlichungstag der Anmeldung: 15.06.2022
(73) Patentinhaber: Kautex Maschinenbau GmbH, 53229 Bonn (DE)
(72) Erfinder: MIELKE, Maurice, 53804 Much (DE); MÜLLER, Michael, 52388 Nörvenich (DE); HOLZKY, Werner, 53842 Troisdorf (DE)
(74) Vertreter: ERNICKE Patent- und Rechtsanwälte PartmbB
(86) Internationale Anmeldenummer: PCT/EP2020/071680
(87) Internationale Veröffentlichungsnummer: WO 2021/023663

(56) Entgegenhaltungen:
- EP-A2- 0 357 004
- WO-A1-89/04243
- US-A- 5 711 349
- US-A1- 2005 191 378

## Beschreibung

Die Erfindung betrifft einen Schmelzeverteiler gemäß dem Oberbegriff von Anspruch 1, insbesondere einen Schmelzeverteiler mit mehreren hosenförmigen Leitungspassagen zum Umlenken und Aufteilen von Schmelze aus thermoplastischem Kunststoff. Der Schmelzeverteiler kann mittelbar oder unmittelbar mit einem Mehrschicht-Extrusionskopf zur Herstellung von mehrschichtigen Vorformlingen aus der Schmelze verbindbar sein.

Die DE 2100192 A offenbart, dass zwei im Wesentlichen koaxial zueinander verlaufende, schlauchartige Teilströme aus thermoplastischem Kunststoff hergestellt werden, deren in Längsrichtung verlaufene Nahtbereiche in Umfangsrichtung gegeneinander versetzt angeordnet sind. Anschließend werden diese Teilströme im plastischen Zustand zur Bildung eines schlauchartigen Vorformlings radial in einem Extrusionskopf zusammengeführt.

Darüber hinaus sind aus dem hausinternen Stand der Technik Mehrschicht-Extrusionsköpfe für die Herstellung von Vorformlingen bekannt, die eine Mehrzahl von Schichten, beispielsweise bis zu sechs Schichten, aufweisen.

Bei einem weiteren hausintern vorbekannten Stand der Technik verfügt der Schmelzeverteiler über eine Mehrzahl von hosenförmigen Rohrleitungen, von denen jede
- ein zuführendes Rohrleitungsteil für die Schmelze sowie zwei ableitende Rohrleitungsteile für die in zwei Stränge aufgeteilte Schmelze aufweist,
- zwischen dem zuführenden Rohrleitungsteil und den zwei ableitenden Rohrleitungsteilen einen Übergang aufweist und
- jedes zuführende Rohrleitungsteil endseitig einen Einlass für die Schmelze und jedes ableitende Rohrleitungsteil endseitig einen Auslass für die Schmelze aufweisen, wobei sämtliche Einlässe auf einer ersten Seite des Schmelzeverteilers und sämtliche Auslässe auf einer gegenüberliegenden Seite des Schmelzeverteilers angeordnet sind.

Der Schmelzeverteiler ist einem Extrusionskopf zur Herstellung von Vorformlingen vorgeordnet, insbesondere einem Mehrschicht-Extrusionskopf zur Herstellung von mehrschichtigen, schlauchförmigen Vorformlingen.

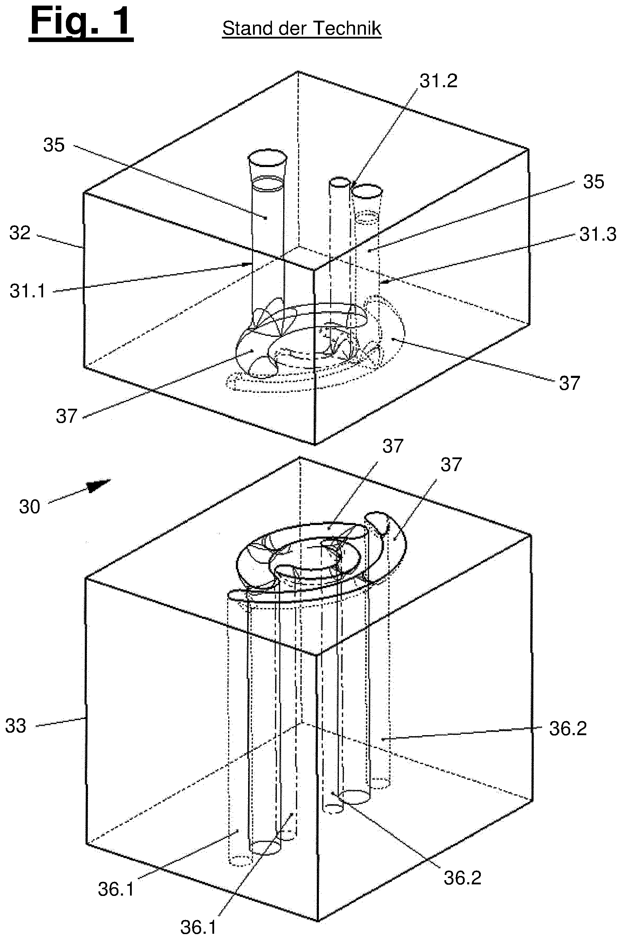

Schließlich ist aus dem in Figur 1 dargestellten hausinternen Stand der Technik ein Schmelzeverteiler (30) bekannt, der entsprechend der Anzahl der Schichten des mit dem Mehrschicht-Extrusionskopf herzustellenden mehrschichtigen Vorformlings, mehrere hosenförmige Rohrleitungen (31.1,31.2,31.3) aufweist, wobei jede hosenförmige Rohrleitung (31.1,31.2,31.3) den Schmelzestrom in zwei Teilströme je Schicht aufteilt.

Der in Figur 1 dargestellte Schmelzeverteiler (30) weist insgesamt drei hosenförmige Rohrleitungen (31.1,31.2,31.3) auf, die drei unterschiedliche Schmelzeströme jeweils in zwei Teilströme aufteilen.

Der hausintern bekannte Schmelzeverteiler (30) umfasst eine obere Platte (32) und eine untere Platte (33) mit einer horizontalen Trennebene (34) zwischen den beiden Platten (32,33). Die zuführenden, geradlinigen Rohrleitungsteile (35) der drei hosenförmigen Rohrleitungen (31.1,31.2,31.3) sind als Bohrungen in die obere Platte (32) eingebracht. Die jeweils zwei ableitenden, geradlinigen Rohrleitungsteile (36.1,36.2) der drei hosenförmigen Rohrleitungen (31.1,31.2,31.3) sind als Bohrungen in die untere Platte (33) eingebracht. Der Übergang (37) zwischen dem zuführenden Rohrleitungsteil (35) und den beiden ableitenden Rohrleitungsteilen (36.1,36.2) jeder hosenförmigen Rohrleitung (31.1,31.2,31.3) ist durch horizontale, in der Trennebene (34) verlaufende Kanäle hergestellt. Die zufließende Schmelze aus dem geradlinigen Rohrleitungsteil (35) wird jeweils in einer T-förmigen Einfließzone auf die beiden Kanäle (37) aufgeteilt. Der Schmelzestrom erfährt von der Fließrichtung im zuführenden Rohrleitungsteil (35) in jeden der Kanäle (37) eine unstetige Umlenkung um 90 ° und weiterhin beim Eintritt von den Kanälen (37) in die ableitenden Rohrleitungsteile (36.1, 36.2) eine erneute unstetige bzw. diskontinuierlich gekrümmte Umlenkung um 90°. Die Kanäle sind jeweils zur Hälfte in die obere Platte (32) und zur Hälfte in die untere Platte (33) durch Fräsen eingebracht.

Der hausintern vorbekannte Schmelzeverteiler gemäß Figur 1 hat eine aufwändige Herstellung. Ferner wird dort der Schmelzestrom im Bereich des Übergangs (37) in Richtung der beiden ableitende Rohre (36.1,36.2) um 90° (Winkelgrad) in die in der Trennebene (34) verlaufenden Kanäle umgelenkt. Diese Umlenkung um 90° erzeugt Totzonen im Schmelzefluss, in denen die Gefahr eines thermischen Abbaus der Schmelze besteht. Des Weiteren wird eine Schmelze mit einer Vorgängerfarbe bei einem Farbwechsel aus Totzonen nur sehr verzögert durch die nachfolgende Schmelze mit einer abweichenden Farbe herausgespült, so dass sich der Farbwechsel verlängert. Die während des Farbwechsels produzierten Artikel sind wegen der Farbdurchmischung von vorheriger und neuer Farbe nicht verwendbar. Zudem verlängert ein derart ausgebildete Übergang den Strömungsweg der Schmelze in dem Verteiler. Ausgehend von diesem hausinternen Stand der Technik liegt der Erfindung die Aufgabe zugrunde, einen verbesserten Schmelzeverteiler zu schaffen, der insbesondere kürzere Strömungswege aufweist, und/oder der die Ausbildung von Totzonen, insbesondere im Bereich des Übergangs, vermeidet und/oder der einfacher herstellbar ist. Weiterhin ist es vorteilhaft, wenn der Schmelzeverteiler eine Anpassung der Fließgeometrie an die Strömung der Schmelze ermöglicht.

Die Druckschriften EP 0 357 004 A2, WO 89/04243 A1, US 5 711 349 A und US 2005/191378 A1 offenbaren weitere Schmelzeverteiler.

Die Erfindung löst diese Aufgabe durch die kennzeichnenden Merkmale des Hauptanspruchs.

Die vorliegende Offenbarung umfasst verschiedene Aspekte, die einzeln oder in Kombination einen Beitrag zur Lösung der Aufgabe leisten können.

Der offenbarungsgemäße Schmelzeverteiler ist bevorzugt dazu vorgesehen, mit einem Mehrschicht-Extrusionskopf zur Herstellung von mehrschichtigen Vorformlingen verbunden zu werden. Die Vorformlinge werden dann aus der Schmelze gebildet, die dem Mehrschicht-Extrusionskopf vom Schmelzeverteiler zugeführt wird.

Der offenbarungsgemäße Schmelzeverteiler ist dazu vorgesehen und ausgebildet, einen oder bevorzugt mehrere Schmelzeströme aus thermoplastischem Kunststoff umzulenken und aufzuteilen. Er weist hierzu eine oder mehrere hosenförmige Schmelzepassagen auf.

Gemäß einem ersten Aspekt ist ein Schmelzeverteiler vorgesehen, bei dem zumindest der verzweigte Übergang zwischen dem zuführenden Passagenteil und den zwei ableitenden Passagenteilen jeder hosenförmigen Schmelzepassage einer gekrümmten Kurve folgt, deren Krümmung ungleich null ist.

Unter der Krümmung wird die Richtungsänderung beim Durchlaufen der Kurve verstanden. Die Krümmung einer Geraden ist überall gleich null, weil sich ihre Richtung nicht ändert. Ein Kreisbogen hat überall die gleiche Krümmung, denn seine Richtung ändert sich überall gleich stark. Eine Kurze kann lokal unterschiedliche Krümmungswerte haben.

Die kontinuierlich verrundete, d. h. die nicht geradlinige und auch keine 90° Knicke umfassende Ausführung zumindest des verzweigten Übergangs des Schmelzeverteilers trägt zu kürzeren Strömungswegen bei und vermeidet die Ausbildung von Totzonen. Die Vermeidung von Totzonen wird dabei besonders durch die Kontinuität der Krümmung begünstigt, d.h. durch die Vermeidung von unstetigen Sprüngen des Krümmungswerts in aneinandergrenzenden Bereichen der Kurve.

Durch das Fehlen jeglicher unstetiger Abwinklungen zwischen den Passagenteilen benötigt der Übergang keine horizontalen Kanäle in einer Trennebene, wie es zwischen den zwei Platten des Schmelzeverteilers nach dem hausinternen Stand der Technik der Fall war.

Für die Ausbildung der verrundeten Übergänge zu den beiden ableitenden Passagenteilen werden weiter bevorzugt kleine Radien vermieden. Vorzugsweise weisen die Bogenlängen der gekrümmten Kurven zu jedem ableitenden Passagenteil in dem verzweigten Übergang einen Mittelpunktswinkel von weniger als 90° auf.

Der Übergang kann weiter als verrundete und bevorzugt symmetrische Y-förmige Passagenverzweigung ausgestaltet sein. Die Y-Form steht dabei im Gegensatz zum T-förmigen Übergang, der beim hausinternen Stand der Technik gemäß Figur 1 vorliegt.

Der zuführende Passagenteil kann einen Vorlauf-Abschnitt haben, der stromaufwärts zu dem verzweigten Übergang angeordnet ist. Die ableitenden Passagenteile können einen Nachlauf-Abschnitt aufweisen, der stromabwärts zu dem verzweigten Übergang angeordnet ist. Zur Verkürzung der Länge der Strömungswege sowie zur Anpassung der Geometrie der hosenförmigen Schmelzepassagen an die Strömung folgen bevorzugt auch diese, sich an den Übergang anschließenden Abschnitte des zuführenden Passagenteils und/oder der zwei ableitenden Passagenteile einer gekrümmten Kurve, deren Krümmung stetig und weiter bevorzugt ungleich null ist. Die hosenförmige Schmelzepassage weist in einer bevorzugt lediglich endseitig an dem Einlass und an den mindestens zwei Auslässen einen loakal geradlinigen Verlauf auf, um eine übereinstimmende Anschlussgeometrie für die Ein- und Auslässe sicherzustellen. In den übrigen Abschnitten folgen sämtliche Passagenteile insgesamt einer (stetig) gekrümmten Kurve.

In einer Ausgestaltung der Erfindung befinden sich sämtliche Einlässe der mehreren hosenförmigen Schmelzepassagen auf einer geraden Linie an der Einlass-Seite, die bevorzugt die Oberseite des Schmelzeverteilers ist. Alternativ oder zusätzlich befinden sich sämtliche Auslässe der hosenförmigen Schmelzepassagen auf einer geraden Linie an der Auslass-Seite, welche bevorzugt die Unterseite des Schmelzeverteilers ist. Die Linie mit den Einlässen und die Linie mit den Auslässen können weiter bevorzugt rechtwinklig zueinander verlaufen, so dass die Rohrleitungsteile jeder hosenförmigen Schmelzepassage einer Raumkurve zwischen dem Einlass und den Auslässen folgen. Diese Ausbildung trägt dazu bei, dass die beiden ableitenden Passagenteile eine übereinstimmende Form und Länge aufweisen, insbesondere eine zur Mitteleben symmetrische Form, so dass der aufgeteilte Schmelzestrom unter übereinstimmenden Bedingungen in einen stromabwärts angeordneten Mehrschicht-Extrusionskopf eintritt.

Sofern der Mehrschicht-Extrusionskopf die aufgeteilten Schmelzeströme mittels ineinander geschachtelter Hülsen mit überlagerten Herzkurvenkanälen extrudiert, verlaufen die Einlässe und die verzweigten Übergänge bevorzugt jeweils auf einer Linie, die parallel zur Formtrennlinie der Blasformmaschine verläuft.

Die offenbarungsgemäße Ausbildung der komplexen, ineinander verschachtelten Struktur der hosenförmigen Schmelzepassagen, insbesondere im Bereich des verzweigten Übergangs, schließt die aus dem Stand der Technik bekannte Herstellung durch Bohrungen in aneinander grenzenden Platten sowie Fräsungen in einer Trennebene zwischen den Platten aus.

Die mindestens eine hosenförmige Schmelzepassage kann in einer bevorzugten Ausgestaltung der Offenbarung in einem einstückigen, aus Vollmaterial bestehendem Schmelzeverteiler ausgebildet sein. In diesem Fall ist der Schmelzeverteiler als einstückiges Bauteil mit einem formlosen, additiven Fertigungsverfahren für metallische Werkstoffe hergestellt. Das einstückige Bauteil kann eine, zwei oder mehr Schmelzepassagen aufweisen, die bevorzugt in zueinander radial benachbarten Ringsegmenten angeordnet sind.

In einer weiteren bevorzugten Ausgestaltung können zwei oder mehr Ringsegmente als separate (und bevorzugt in sich einstückige) Bauteile ausgebildet sein, wobei in zumindest einem Ringsegment eine hosenförmige Schmelzepassage mit dem verzweigten Übergang und dem stetigen Krümmungsverlauf ausgebildet ist. Durch die Unterteilung des Schmelzeverteilers in Ringsegmente kann ein modularer Aufbau erreicht werden, der eine gezielte Anpassung an nur einem oder einem Teil der Schmelzeströme gestattet, ohne den gesamten Schmelzeverteiler neu anfertigen zu müssen. Ein Ringsegment kann für sich allein gewechselt werden, bspw. um nur für einen bestimmten Schmelzestrom eine andere Fließgeometrie bereitzustellen, während das oder die anderen Ringsegmente beibehalten werden.

Die einstückige Ausbildung des Bauteils (Schmelzeverteiler insgesamt oder Ringsegment), in welchem die hosenförmige Schmelzepassage aufgenommen ist, stellt einen eigenständigen Aspekt der vorliegenden Offenbarung dar. Das gilt insbesondere für einen Mehrschicht-Schmelzeverteiler. Ein besonderer Vorteil der Einstückigkeit besteht darin, dass die im Stand der Technik vorgesehene Trennebene zwischen den aneinandergrenzenden Platten entfällt und dadurch Leckageverluste und Randhaftungszonen vermieden werden. Hierdurch werden Verunreinigungen der Schmelze durch Rückstände aus Leckagespalten sowie daraus resultierende Betriebsstörungen und Reinigungsarbeiten vermieden. Die Außenkontur der Schmelzepassage kann insgesamt durch das einstückige Bauteil bzw. das einstückige Ringsegment gebildet sein, sodass der Schmelzestrom innerhalb des Schmelzeverteilers keinen schräg zur Strömungsrichtung oder in Tangentialrichtung zur Strömungsrichtung verlaufenden Trennfugen begegnet.

Eine einstückige Ausbildung des Schmelzeverteilers mit einer komplexen Kanalgeometrie gelingt (unter Abkehr von den bekannten spanenden Fertigungsverfahren mit Verwendung von mindestens zwei Platten) durch den Einsatz eines additiven Herstellungsverfahrens für metallische Werkstoffe. Ein solches Herstellungsverfahren ist zur Ausbildung eines einstückigen Bauteils geeignet und gestattet die Vorgabe beliebiger Innenraum-Geometrien mit und ohne Hinterschneidungen. Neben den deutlich reduzierten Herstellungskosten für den Schmelzeverteiler ist als weiterer Vorteil die große Geometriefreiheit zu nennen, die für die Ausbildung der hosenförmigen Schmelzepassagen von besonderer Bedeutung ist.

Das selektive Laserschmelzen (englisch Selective Laser Melting, Abk. SLM) gehört zu den additiven Fertigungsverfahren. Es eignet gut sich für metallische Werkstoffe und wird zur Herstellung des offenbarungsgemäßen Schmelzeverteilers oder eines Ringsegments vorgeschlagen. Alternativ kann ein beliebiges anderes Herstellungsverfahren, insbesondere ein anderes additives Herstellungsverfahren eingesetzt werden.

Beim selektiven Laserschmelzen wird der zu verarbeitende metallische Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis alle Schichten umgeschmolzen sind. Das fertige Bauteil wird vom überschüssigen Pulver gereinigt, von der Grundplatte abgetrennt und nach Bedarf nachbearbeitet oder sofort verwendet. Die für den Aufbau des Bauteils typischen Schichtstärken bewegen sich materialunabhängig zwischen 15 und 500 um. Die Daten für die Führung des Laserstrahls werden mittels einer Software aus einem 3D-CAD-Körper erzeugt. Im ersten Berechnungsschritt wird das Bauteil in einzelne Schichten unterteilt. Im zweiten Berechnungsschritt werden für jede Schicht die Bahnen (Vektoren) erzeugt, die der Laserstrahl abfährt.

Ein Extrusionskopf und insbesondere ein Mehrschicht-Extrusionskopf zur Herstellung von thermoplastischen, schlauchförmigen Vorformlingen, der mit einem erfindungsgemäßen Schmelzeverteiler ausgestattet ist, bildet eine Baugruppe. Mehrere derartige Baugruppen können zur gleichzeitigen Herstellung von mehreren mehrschichtigen Vorformlingen vorteilhaft zu einem Mehrfach-Extrusionskopf konstruktiv zusammengefasst sein

Die Erfindung ist in den Zeichnungen beispielhaft und schematisch dargestellt. Es zeigen:
- Figur 1:: einen Schmelzeverteiler gemäß einem hausinternen Stand der Technik
- Figur 2A: eine teilweise transparente Darstellung eines Schmelzeverteilers gemäß der vorliegenden Offenbarung in Vorderansicht und Seitenansicht von links,
- Figur 2B: eine teilweise transparente perspektivische Darstellung des Schmelzeverteilers nach Figur 2A sowie
- Figur 3: einen Mehrfach-Extrusionskopf, der mit mehreren Extrudern zum Bereitstellen unterschiedlicher Schmelzeströme verbunden ist.

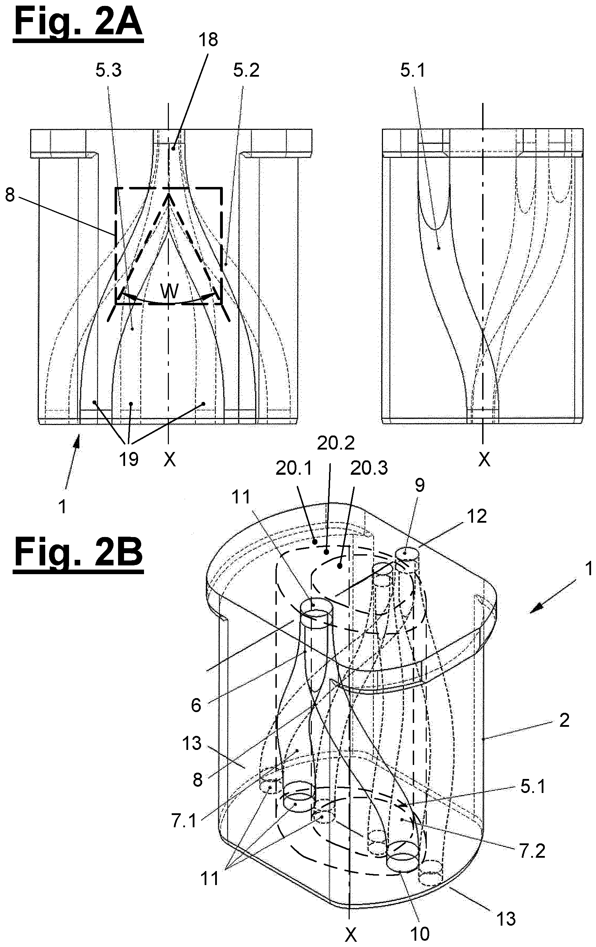

Eine bevorzugte Ausführung des offenbarungsgemäßen Schmelzeverteilers 1 ist in Figuren 2A und 2B in zusammengehörenden Ansichten gezeigt.

Der Schmelzeverteiler 1 umfasst in dem Beispiel ein einstückiges, metallisches Bauteil 2 mit einer Einlass-Seite 3 und einer Auslass-Seite 4. Dein Einlass-Seite 3 ist in dem Beispiel die Oberseite und die Auslass-Seite 4 ist die gegenüberliegenden Unterseite. Von dieser Konstellation wird im Weiteren zur Vereinfachung der Darstellung ausgegangen. Alternativ können die Einlass-Seite 3 und die Auslass-Seite 4 relativ zueinander oder im Raum eine andere Orientierung aufweisen.

Zwischen der Einlass-Seite 3 und der Auslass-Seite 4 erstrecken sich in dem gezeigten Beispiel drei hosenförmige Schmelzepassagen 5.1, 5.2, 5.3. Die Anzahl der Schmelzepassagen kann von diesem Beispiel abweichen. Es können eine, zwei, drei, vier oder noch mehr Schmelzepassagen vorgesehen sein. Diese können bevorzugt in zueinander benachbarten Raumzonen liegen, sodass sich die Schmelzepassagen gegenseitig nicht berühren. Eine oder mehrere Raumzonen können eine Segmentform haben, die sich insbesondere entlang einer Hauptachse X als gerade Körper erstreckt. Eine Raumzone kann somit besonders bevorzugt die Form eines Zylinderrings haben. Die Hauptachse X kann sich in einem axialen Zentrum des Schmelzeverteilers befinden. Dort kann eine weitere und bevorzugt gerade Passage (nicht dargestellt) vorgesehen sein, die beispielsweise für das Hindurchleiten einer Medienverbindung oder einer mechanischen Komponente dienen kann.

Im einfachsten Fall umfasst der Schmelzeverteiler 1 genau eine hosenförmige Schmelzepassage mit dem offenbarungsgemäßen verzweigten Übergang 8 mit der stetigen Krümmung. Darüber hinaus können weitere Schmelzepassagen mit anderen Verläufen vorgesehen sein. Wiederum alternativ können zwei, drei oder alle Schmelzepassagen einen hosenförmigen Verlauf und einen verzweigten Übergang 8 gemäß der vorliegenden Offenbarung haben.

Das Bauteil 2 ist beispielsweise als einteiliger, metallischer Block ausgestaltet, in dem die eine oder mehreren hosenförmigen Schmelzepassagen 5.1, 5.2, 5.3 als fluidleitende Durchlässe angeordnet sind. Die Herstellung des Blocks mit den die Schmelzepassagen 5.1, 5.2, 5.3 bildenden fluidleitenden Durchlässen erfolgt im Wege eines additiven Fertigungsverfahrens, insbesondere im Wege des selektiven Laserschmelzens (englisch Selective Laser Melting, Abk. SLM).

Mindestens eine und bevorzugt jede hosenförmige Schmelzepassage 5.1, 5.2, 5.3 weist einen zuführendes Passagenteil 6 für die Schmelze sowie mindestens zwei und gemäß der bevorzugten Ausführung genau zwei ableitende Passagenteile 7.1,7.2 auf. Zwischen dem zuführenden Passagenteil 6 und den beiden ableitenden Passagenteilen 7.1,7.2 weist die offenbarungsgemäße hosenförmige Schmelzepassage 5.1,5.2,5.3 einen verzweigten Übergang 8 auf, der in Figur 2A durch einen Kasten hervorgehoben ist. Der verzweigte Übergang 8 ist als verrundete y-förmige Leitungsverzweigung ausgestaltet. Die Leitungsverzweigung kann weiter bevorzugt symmetrisch ausgebildet sein, insbesondere symmetrisch zu einer Mittelebene.

Der zuführende Passagenteil 6 weist endseitig einen Einlass 9 auf. Gemäß einer bevorzugten Ausführung können die Einlässe mehrerer hosenförmiger Schmelzepassagen in der Einlass-Seite 3 des Bauteils 2 liegenden. Jedes ableitende Rohrleitungsteil 7.1, 7.2 weist endseitig einen Auslass 10 auf. Bevorzugt sind alle Auslässe 10 in der Auslass-Seite 4 angeordnet. Angrenzend an den Einlass 9 bzw. Auslass 10 können einzelne Passagenteile oder kann jeder Passagenteil 6, 7.1, 7.2 Vorlauf-Abschnitt 18 oder Nachlauf-Abschnitt 19 mit einer abweichenden Geometrie aufweisen. Ein Vorlauf-Abschnitt 18 oder Nachlauf-Abschnitt 19 kann insbesondere einen kurzen geradlinigen, zylindrischen Passagen-Abschnitt 11 aufweisen. Diese kann beispielsweise senkrecht zu der Einlass-Seite 3 bzw. Auslass-Seite 4 des Bauteils 2 verlaufen.

Der verzweigte Übergang zwischen dem zuführenden Passagenteil 6 und den ableitenden Passagenteilen 7.1,7.2 der hosenförmigen Schmelzepassage 5.1, 5.2, 5.3 und etwaig die sich an den verzweigten Übergang 8 anschließenden Nachlauf-Abschnitte 19 der ableitenden Passagenteile 7.1,7.2 folgen indes einer gekrümmten Kurve, deren Krümmung stetig und ungleich null ist. Dieser offenbarungsgemäß kontinuierlich gekrümmte Verlauf der hosenförmigen Schmelzepassage weist keinerlei Abwinklungen und Totzonen auf. Eine kontinuierliche Krümmung kann auch als eine stetige Krümmung bzw. als ein Verlauf mit einem sich stetig ändernden Wert der Krümmung bezeichnet sein.

Die Bogenlängen der gekrümmten Kurven in dem verzweigten Übergang 8 weisen gemäß einer besonders bevorzugten Ausführung einen Mittelpunktswinkel W von weniger als 90° auf. Diese Ausbildung kann für nur eine, mehrere oder alle hosenförmigen Schmelzepassagen des Schmelzeverteilers 1 vorgesehen sein.

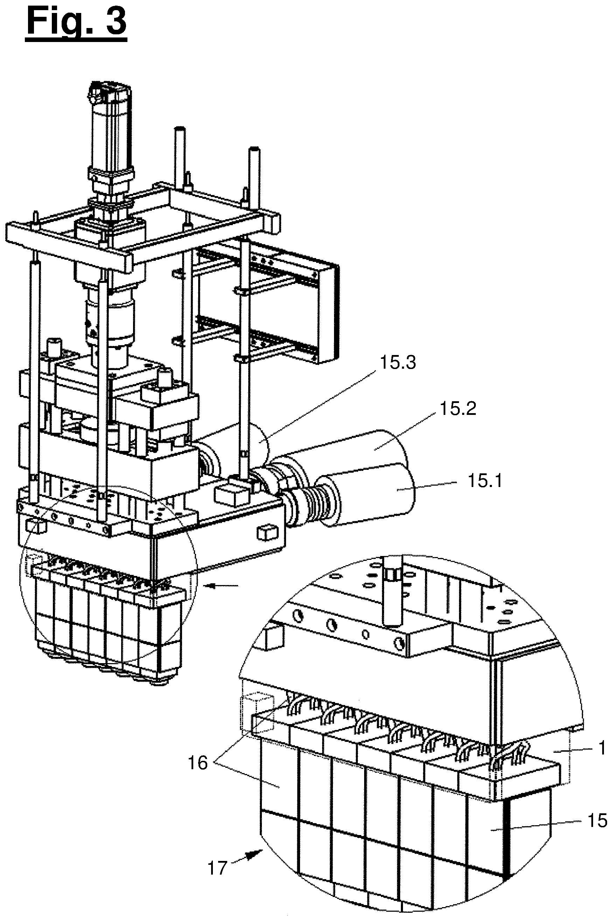

Figur 3 zeigt ein Beispiel für das Zusammenwirken des offenbarungsgemäßen Schmelzeverteilers 1 mit einem oder mehreren Extrudern und einem Extrusionskopf. Die Einlässe 9 des in Figuren 2A und 2B gezeigten Schmelzeverteilers sind in dem gezeigten Beispiel (mittelbar) mit den Ausgängen von drei, lediglich in Figur 3 dargestellten Extrudern 14.1, 14.2, 14.3 verbindbar oder verbunden. Ein Extruder ist ein Schmelzeförderer, der den Schmelzestrom aus einem thermoplastischen Kunststoff bereitstellt und fördert. Es können in alternativen Ausführungen auch nur ein, zwei, vier oder eine beliebige andere Zahl an Extrudern vorgesehen sein. Ferner kann zumindest ein Schmelzestrom von einer anderen Quelle bereitgestellt sein.

Der Einlass 9 der hosenförmigen Schmelzepassage 5.1 ist mit dem Extruder 14.1 für die Ausbildung der Hauptschicht eines Vorformlings aus thermoplastischem Kunststoff verbunden. Diese hosenförmige Schmelzepassage 5.1 weist den größten Eingangs-Durchmesser auf. Über die beiden weiteren hosenförmigen Schmelzepassagen 5.2, 5.3 werden thermoplastische Kunststoffmaterialien zur Ausbildung weiterer Schichten des mehrschichtigen Vorformlings zugeführt, die in einer Schlauchbildungseinheit eines Mehrschicht-Extrusionskopfes 15 zusammengeführt werden.

Die stromabwärts gelegenen Durchmesser, d.h. die Ausgangs-Durchmesser an den Auslässen 10 und/oder der Passagen-Durchmesser der ableitenden Passagenteile 7.1, 7.2, sind bevorzugt geringer als der stromaufwärts gelegene Durchmesser, d.h. der Einlass-Durchmesser am Einlass 9 und/oder der Passagen-Durchmesser des zuführenden Passagenteils 6. Das Verhältnis der stromabwärts gelegenen Durchmesser zu den stromaufwärts gelegenen Durchmessern ist bevorzugt derart gewählt, dass die Strömungsgeschwindigkeit der einlaufenden Kunststoffschmelze im Wesentlichen gleich der Strömungsgeschwindigkeit der austretenden Kunststoffschmelze ist. Weiterhin ist bevorzugt ∘entlang des Schmelzestroms die Summe der stromabwärts gelegenen Passagen-Durchmesser im Wesentlichen gleich den stromaufwärts gelegenen Passagen-Durchmessern. Hierdurch wird die Bildung von Verweilzonen im Lauf des Schmelzestroms verhindert. Verweilzonen bilden sich häufig in Passagenbereichen, in denen eine lokale Erhöhung des (Querschnitt)-Durchmessers auftritt, was zu einer lokalen Verringerung der Fließgeschwindigkeit führt. Diese verminderte Fließgeschwindigkeit kann zur Bildung von Ablagerungen im Randbereich der Passage führen, was denselben negativen Effekt erzeugen kann, wie die oben erläuterten Totzonen.

Besonders bevorzugt weist eine hosenförmige Schmelzepassage (5.1, 5.2, 5.3) entlang des Schmelzestromes einen einheitlichen Passagen-Gesamtdurchmesser auf, sodass die (bezogen auf den Querschnitt mittlere) Fließgeschwindigkeit der Schmelze entlang der Passage im Wesentlichen identisch ist, und zwar bevorzugt unabhängig davon, ob die Schmelze sich in dem zuführende Passagenteil (6) oder (als geteilter Schmelzestrom) in den ableitenden Passagenteilen (7.1, 7.2) befindet. Mit anderen Worten ist der GesamtDurchmesser der Passagenteile also derart gewählt, dass innerhalb der hosenförmigen Schmelzepassage (5.1, 5.2, 5.4) eine einheitliche Fließgeschwindigkeit vorliegt.

In einem Längenabschnitt des zuleitenden Passagenteils (6) ist der Passagen-Gesamtdurchmesser identisch mit dem dortigen Durchmesser des zuleitenden Passagenteils (6). In einem Längenabschnitt der (zusammengehörenden und zueinander benachbarten) ableitenden Passagenteile (7.1, 7.2) ist der Gesamtdurchmesser durch die Summe der Einzeldurchmesser dieser ableitenden Passagenteile (7.1, 7.2) gebildet, die an den in Strömungsrichtung zueinander korrespondierenden Längenabschnitten vorliegen.

Gemäß einem weiteren Aspekt der Offenbarung ist die Krümmung bevorzugt in jedem Längenbereich der hosenförmigen Schmelzepassage (5.1, 5.2, 5.3) derart gewählt, dass das Verhältnis des lokalen Krümmungsradius zum lokalen Durchmesser der Passager größer oder gleich einem Mindest-Verhältnisgrenzwert ist. Der Mindest-Verhältnisgrenzwert kann in Abhängigkeit von dem Material der zu verarbeitenden Kunststoff-Schmelze und des Drucks festgelegt sein. Er liegt insbesondere bei mindestens 2,5. Besonders bevorzugt hat der Mindest-Verhältnisgrenzwert den Wert 3.

Die vorstehenden Darstellungen gehen davon aus, dass die Passagenteile (6, 7.1, 7.2) einen im Wesentlichen kreisrunden oder ovalen Querschnitt aufweisen, sodass der Durchmesser direkt mit der Querschnittsfläche der Passage korreliert. Eine solche Darstellung ist in der Rheologie üblich und die im Wesentlichen kreisrunde oder ovale Querschnittsform ist die bevorzugte Ausführung. Der Fachmann erkennt, dass mit dem Begriff "Durchmesser" auch eine andere geometrische Größe erfasst ist, die zur Beschreibung der Weite der jeweiligen Passage geeignet ist und unter Berücksichtigung der fluiddynamischen Gesetze eine entsprechende Wirkung für die Leitung des Schmelzestroms hat, insbesondere hinsichtlich der Beeinflussung der lokalen Fließgeschwindigkeit und hinsichtlich der Bildung von Totzonen und Verweilzonen.

Sämtliche Einlässe 9 der drei hosenförmigen Schmelzepassagen 5.1, 5.2, 5.3 verlaufen in dem Beispiel von Figur 3 auf einer geraden Linie 12 an der Einlass-Seite 3 des Schmelzeverteilers. Und sämtliche Auslässe 10 der hosenförmigen Schmelzepassagen 5.1, 5.2, 5.3 verlaufen auf einer geraden Linie 13 an der Auslass-Seite 4 des Schmelzeverteilers 1. Die Linien 12, 13 verlaufen dabei in Blickrichtung der Hauptachse X rechtwinklig zueinander, so dass die Passagenteile 6, 7.1, 7.2 einer sich verzweigenden, gekrümmten Raumkurve zwischen dem Einlass 9 und den beiden Auslässen 10 folgen. Die beiden ableitenden Passagenteile 7.1, 7.2 weisen eine übereinstimmende Form und Länge auf, so dass der in der hosenförmigen Schmelzepassage 5.1, 5.2, 5.3 aufgeteilte Schmelzestrom unter übereinstimmenden Bedingungen in den an den Schmelzeverteiler 1 anschließenden Mehrschicht-Extrusionskopf 15 eintritt. Diese übereinstimmende (symmetrische) Form und Länge der ableitenden Passagenteile können bevorzugt bei mehreren oder allen Schmelzepassagen vorgesehen sein.

Jeweils ein Schmelzeverteiler 1 und ein Mehrschicht-Extrusionskopf 15 können eine Baugruppe 16 bilden.

Vorzugseise werden, wie in Figur 3 dargestellt, mehrere Baugruppen 16 zu einem Mehrfach-Extrusionskopf 17 zusammengefasst, um gleichzeitig mehrere Vorformlinge zu extrudieren, die bevorzugt jeweils aus mehreren Schmelzeschichten aufgebaut sind..

Es ist weiterhin möglich, in einem Schmelzeverteiler zwei, drei oder mehr benachbarte Gruppen von Schmelzepassagen mit der offenbarungsgemäßen Formgebung vorzusehen, wobei jeder Gruppe von Schmelzepassagen ein Extrusionskopf nachgeordnet ist.

Abwandlungen der Erfindung sind in verschiedener Weise möglich. Insbesondere können die zu den jeweiligen Ausführungsbeispielen gezeigten, beschriebenen oder beanspruchten Merkmale in beliebiger Weise miteinander kombiniert oder gegeneinander ersetzt werden.

Eine Schmelzepassage ist gemäß der vorliegenden Offenbarung eine Leitungspassage zum Umlenken und etwaig zum Aufteilen einer Schmelze aus einem thermoplastischen Kunststoff. Sie kann als eine Rohrleitung ausgebildet sein. Ein Passagenteil kann entsprechend als ein Rohrleitungsteil ausgebildet sein.

### BEZUGSZEICHENLISTE

### Erfindung (Figuren 2 und 3)

- 1: Schmelzeverteiler
- 2: Bauteil
- 3: obere Seite / Einlass-Seite
- 4: untere Seite / Auslass-Seite
- 5.1: hosenförmige Schmelzepassage / hosenförmige Rohrleitung
- 5.2: hosenförmige Schmelzepassage / hosenförmige Rohrleitung
- 5.3: hosenförmige Schmelzepassage / hosenförmige Rohrleitung
- 6: zuführender Passagenteil / zuführendes Rohrleitungsteil
- 7.1: ableitender Passagenteil / ableitendes Rohrleitungsteil
- 7.2: ableitender Passagenteil / ableitendes Rohrleitungsteil
- 8: verzweigter Übergang
- 9: Einlass
- 10: Auslass
- 11: zylindrischer Passagen-Abschnitt
- 12: gerade Linie
- 13: gerade Linie
- 14.1: Extruder / Schmelzeförderer
- 14.2: Extruder / Schmelzeförderer
- 14.3: Extruder / Schmelzeförderer
- 15: Mehrschicht-Extrusionskopf
- 16: Baugruppe
- 17: Mehrfach-Extrusionskopf
- 18: Vorlauf-Abschnitt
- 19: Nachlauf-Abschnitt
- 20.1: Ringsegment
- 20.2: Ringsegment
- 20.3: Ringsegment
- W: Mittelpunktswinkel

### Stand der Technik (Figur 1)

- 30: Schmelzeverteiler
- 31.1: hosenförmige Rohrleitung
- 31.2: hosenförmige Rohrleitung
- 31.3: hosenförmige Rohrleitung
- 32: obere Platte
- 33: untere Platte
- 34: Trennebene
- 35: zuführendes Rohrleitungsteil
- 36.1: ableitendes Rohrleitungsteil
- 36.2: ableitendes Rohrleitungsteil
- 37: Übergang

## Patentansprüche

1. Schmelzeverteiler (1) zum Umlenken und Aufteilen von Schmelze aus einem thermoplastischen Kunststoff, wobei der Schmelzeverteiler (1) mit einem Mehrschicht-Extrusionskopf zur Herstellung von mehrschichtigen Vorformlingen aus der Schmelze der mehreren Schmelzeströme verbindbar ist, und wobei der Schmelzeverteiler (1) mehrere hosenförmige Schmelzepassagen (5.1, 5.2, 5.3) umfasst und mindestens eine oder jede hosenförmige Schmelzepassage
- einen zuführenden Passagenteil (6) sowie mindestens zwei ableitende Passagenteile (7.1, 7.2) aufweist, und
- zwischen dem zuführenden Passagenteil (6) und den ableitenden Passagenteilen (7.1, 7.2) ein verzweigter Übergang (8) vorgesehen ist, und
- der zuführende Passagenteil (6) endseitig einen Einlass (9) für die Schmelze aufweist und jeder ableitende Passagenteil (7.1, 7.2) einer hosenförmigen Schmelzepassage (5.1, 5.2, 5.3) endseitig einen Auslass (10) für die Schmelze aufweist,
- und wobei zumindest der verzweigte Übergang (8) als verrundete Y-förmige Leitungsverzweigung ausgestaltet ist, und wobei der verzweigte Übergang (8) zwischen dem zuführenden Passagenteil (6) und den zwei verbundenen ableitenden Passagenteilen (7.1, 7.2) einer kontinuierlich gekrümmten Kurve folgt, deren Krümmung ungleich null ist,
- **dadurch gekennzeichnet, dass** der Schmelzeverteiler (1) als einstückiges Bauteil (2) ausgebildet ist und alle hosenförmigen Schmelzepassagen (5.1, 5.2, 5.3) in dem einstückigen Bauteil (2) angeordnet sind, und wobei das einstückige Bauteil mit den hosenförmigen Schmelzepassagen (5.1, 5.2 5.3) mit einem formlosen, additiven Fertigungsverfahren für metallische Werkstoffe hergestellt ist.

2. Schmelzeverteiler (1) zum Umlenken und Aufteilen von Schmelze aus einem thermoplastischen Kunststoff, wobei der Schmelzeverteiler (1) mit einem Mehrschicht-Extrusionskopf zur Herstellung von mehrschichtigen Vorformlingen aus der Schmelze der mehreren Schmelzeströme verbindbar ist, und wobei der Schmelzeverteiler (1) mehrere hosenförmige Schmelzepassagen (5.1, 5.2, 5.3) umfasst und mindestens eine oder jede hosenförmige Schmelzepassage
- einen zuführenden Passagenteil (6) sowie mindestens zwei ableitende Passagenteile (7.1, 7.2) aufweist, und
- zwischen dem zuführenden Passagenteil (6) und den ableitenden Passagenteilen (7.1, 7.2) ein verzweigter Übergang (8) vorgesehen ist, und
- der zuführende Passagenteil (6) endseitig einen Einlass (9) für die Schmelze aufweist und jeder ableitende Passagenteil (7.1, 7.2) einer hosenförmigen Schmelzepassage (5.1, 5.2, 5.3) endseitig einen Auslass (10) für die Schmelze aufweist,
- und wobei zumindest der verzweigte Übergang (8) als verrundete Y-förmige Leitungsverzweigung ausgestaltet ist, und wobei der verzweigte Übergang (8) zwischen dem zuführenden Passagenteil (6) und den zwei verbundenen ableitenden Passagenteilen (7.1, 7.2) einer kontinuierlich gekrümmten Kurve folgt, deren Krümmung ungleich null ist,
- **dadurch gekennzeichnet, dass** der Schmelzeverteiler (1) zwei oder mehr Ringsegmente (20.1, 20.2, 20.3) als separate und in sich einstückige Bauteile aufweist, wobei in zumindest einem Ringsegment (20.1, 20.2, 20.3) eine der hosenförmigen Schmelzepassagen (5.1, 5.2, 5.3) mit dem verzweigten Übergang und dem stetigen Krümmungsverlauf ausgebildet ist und wobei
∘ jede der hosenförmigen Schmelzepassagen (5.1, 5.2 5.3) in einem separaten als einstückiges Bauteil ausgeführten Ringsegment (20.1, 20.2, 20.3) des Schmelzeverteilers (1) angeordnet ist; ODER
∘ eine Teilgruppe der hosenförmigen Schmelzepassagen (5.1, 5.2, 5.3) in einem als einstückiges Bauteil ausgeführten Ringsegment (20.1, 20.2, 20.3) des Schmelzeverteilers (1) angeordnet ist;
- und wobei das einstückige Bauteil mit der oder den hosenförmigen Schmelzepassagen (5.1, 5.2 5.3) mit einem formlosen, additiven Fertigungsverfahren für metallische Werkstoffe hergestellt ist.

3. Schmelzeverteiler nach Anspruch 1 oder 2, wobei die Bogenlängen der gekrümmten Kurven in dem verzweigten Übergang (8) einen Mittelpunktswinkel (W) von weniger als 90° aufweisen.

4. Schmelzeverteiler nach Anspruch 1, 2 oder 3, wobei sich
- an den Übergang (8) einer hosenförmigen Schmelzepassage (5.1, 5.2, 5.3) ein Vorlauf-Abschnitt (18) des zuführenden Passagenteils (6) anschließt, und/oder
- wobei sich an den verzweigten Übergang (8) je ein Nachlauf-Abschnitt (19) der ableitenden Passagenteile (7.1, 7.2) anschließt, UND wobei
- der Vorlauf-Abschnitt (18) oder die Nachlauf-Abschnitte (19) ebenfalls einer kontinuierlich gekrümmten Kurve folgen, deren Krümmung ungleich null ist.

5. Schmelzeverteiler nach einem der Ansprüche 1 bis 4, wobei sich mehrere Einlässe (9) der mehreren hosenförmigen Schmelzepassagen (5.1, 5.2 5.3) auf einer geraden Linie (12) an der Einlass-Seite (3) des Schmelzeverteilers (1) befinden und/oder wobei sich mehrere oder sämtliche Auslässe (10) der hosenförmige Rohrleitungen(5.1, 5.2 5.3) auf einer geraden Linie (13) an der Auslass-Seite (4) des Schmelzeverteilers (1) befinden.

6. Schmelzeverteiler nach einem der vorhergehenden Ansprüche, wobei sämtliche Einlässe (9) auf einer Einlass-Seite (3) des Schmelzeverteilers (1) und/oder sämtliche Auslässe (10) auf einer gegenüberliegenden Auslass-Seite (4) des Schmelzeverteilers (1) angeordnet sind.

7. Schmelzeverteiler nach einem der vorhergehenden Ansprüche, wobei die hosenförmige Schmelzepassage (5.1, 5.2, 5.3)
- stromabwärts gelegene Passagen-Durchmesser aufweist, insbesondere einen Ausgangs-Durchmesser der ableitenden Passagenteile (7.1, 7.2) und/oder der Auslässe (10), UND
- stromaufwärts gelegene Passagen-Durchmesser aufweist, insbesondere einen Einlass-Durchmesser des zuleitende Passagenteils (6) und/oder des Einlasses (9), UND wobei
∘ Das Verhältnis der stromabwärts gelegenen Durchmesser zu den stromaufwärts gelegenen Durchmessern derart gewählt ist, dass die Strömungsgeschwindigkeit der einlaufenden Kunststoffschmelze im Wesentlichen gleich der Strömungsgeschwindigkeit der austretenden Kunststoffschmelze ist; UND/ODER wobei
o entlang des Schmelzestroms die Summe der stromabwärts gelegenen Passagen-Durchmesser im Wesentlichen gleich den stromaufwärts gelegenen Passagen-Durchmessern ist.

8. Schmelzeverteiler nach einem der vorhergehenden Ansprüche, wobei eine hosenförmige Schmelzepassage (5.1, 5.2, 5.3) entlang des Schmelzestromes einen einheitlichen Passagen-Gesamtdurchmesser aufweist, sodass innerhalb der hosenförmigen Schmelzepassage (5.1, 5.2, 5.4) eine einheitliche Fließgeschwindigkeit vorliegt.

9. Schmelzeverteiler nach einem der vorhergehenden Ansprüche, wobei die Krümmung in jedem Längenbereich der hosenförmigen Schmelzepassage (5.1, 5.2, 5.3) derart gewählt, dass das Verhältnis des lokalen Krümmungsradius zum lokalen Durchmesser der Passage größer oder gleich einem Mindest-Verhältnisgrenzwert ist, wobei der Mindest-Verhältniswert größer als 2,5 ist und insbesondere den Wert 3 hat.

10. Baugruppe umfassend einen Extrusionskopf, insbesondere einen Mehrschicht-Extrusionskopf, und einen Schmelzeverteiler nach einem der Ansprüche 1 bis 9.

11. Mehrfach-Extrusionskopf zur gleichzeitigen Herstellung von mehreren mehrschichtigen Vorformlingen umfassend mehrere Baugruppen nach Anspruch 10 oder einen Schmelzeverteiler nach einem der Ansprüche 1 bis 9, bei dem mehrere benachbarte Gruppen von hosenförmigen Schmelzepassagen vorgesehen sind.

## Claims

1. Melt distributor (1) for redirecting and dividing melt from a thermoplastic, wherein the melt distributor (1) is connectable to a multi-layer extrusion head for production of multi-layer preforms from the melt of the multiple melt flows, and wherein the melt distributor (1) comprises multiple trouser-like melt passages (5.1, 5.2, 5.3) and at least one or each trouser-like melt passage
- has a feeding passage part (6) and at least two discharging passage parts (7.1, 7.2), and
- a branched transition (8) is provided between the feeding passage part (6) and the discharging passage parts (7.1, 7.2), and
- the feeding passage part (6) has an inlet (9) for the melt at the end and each discharging passage part (7.1, 7.2) of a trouser-like melt passage (5.1, 5.2, 5.3) has an outlet (10) for the melt at the end,
- and wherein at least the branched transition (8) is designed as a rounded Y-shaped line branch, and wherein the branched transition (8) follows a continuously curved curve, the curvature of which is not equal to zero, between the feeding passage part (6) and the two connected discharging passage parts (7.1, 7.2),
- **characterized in that** the melt distributor (1) is in the form of a one-piece component (2) and all the trouser-like melt passages (5.1, 5.2, 5.3) are arranged in the one-piece component (2), and wherein the one-piece component with the trouser-like melt passages (5.1, 5.2, 5.3) is produced by means of a mould-less, additive manufacturing method for metallic materials.

2. Melt distributor (1) for redirecting and dividing melt from a thermoplastic, wherein the melt distributor (1) is connectable to a multi-layer extrusion head for production of multi-layer preforms from the melt of the multiple melt flows, and wherein the melt distributor (1) comprises multiple trouser-like melt passages (5.1, 5.2, 5.3) and at least one or each trouser-like melt passage
- has a feeding passage part (6) and at least two discharging passage parts (7.1, 7.2), and
- a branched transition (8) is provided between the feeding passage part (6) and the discharging passage parts (7.1, 7.2), and
- the feeding passage part (6) has an inlet (9) for the melt at the end and each discharging passage part (7.1, 7.2) of a trouser-like melt passage (5.1, 5.2, 5.3) has an outlet (10) for the melt at the end,
- and wherein at least the branched transition (8) is designed as a rounded Y-shaped line branch, and wherein the branched transition (8) follows a continuously curved curve, the curvature of which is not equal to zero, between the feeding passage part (6) and the two connected discharging passage parts (7.1, 7.2),
- **characterized in that** the melt distributor (1) has two or more ring segments (20.1, 20.2, 20.3) as separate and inherently one-piece components, wherein one of the trouser-like melt passages (5.1, 5.2, 5.3) is formed with the branched transition and the constant curvature profile in at least one ring segment (20.1, 20.2, 20.3) and wherein
o each of the trouser-like melt passages (5.1, 5.2, 5.3) is arranged in a separate ring segment (20.1, 20.2, 20.3), embodied as a one-piece component, of the melt distributor (1); OR
o a subgroup of the trouser-like melt passages (5.1, 5.2, 5.3) is arranged in a ring segment (20.1, 20.2, 20.3), embodied as a one-piece component, of the melt distributor (1);
- and wherein the one-piece component with the trouser-like melt passage or passages (5.1, 5.2, 5.3) is produced by means of a mould-less, additive manufacturing method for metallic materials.

3. Melt distributor according to Claim 1 or 2, wherein the arc lengths of the curved curves in the branched transition (8) have a centre angle (W) of less than 90°.

4. Melt distributor according to Claim 1, 2 or 3, wherein
- the transition (8) of a trouser-like melt passage (5.1, 5.2, 5.3) is adjoined by an infeed portion (18) of the feeding passage part (6), and/or
- wherein the branched transition (8) is adjoined by a respective outfeed portion (19) of the discharging passage parts (7.1, 7.2), AND wherein
- the infeed portion (18) or the outfeed portions (19) also follow a continuously curved curve, the curvature of which is not equal to zero.

5. Melt distributor according to one of Claims 1 to 4, wherein multiple inlets (9) of the multiple trouser-like melt passages (5.1, 5.2, 5.3) are located on a straight line (12) on the inlet side (3) of the melt distributor (1) and/or wherein multiple or all outlets (10) of the trouser-like pipe (5.1, 5.2, 5.3) are located on a straight line (13) on the outlet side (4) of the melt distributor (1).

6. Melt distributor according to one of the preceding claims, wherein all the inlets (9) are arranged on an inlet side (3) of the melt distributor (1) and/or all the outlets (10) are arranged on an opposite outlet side (4) of the melt distributor (1).

7. Melt distributor according to one of the preceding claims, wherein the trouser-like melt passage (5.1, 5.2, 5.3)
- has downstream passage diameters, in particular an output diameter of the discharging passage parts (7.1, 7.2) and/or of the outlets (10), AND
- upstream passage diameters, in particular an inlet diameter of the feeding passage part (6) and/or of the inlet (9), AND wherein
o the ratio of the downstream diameters to the upstream diameters is selected in such a way that the flow speed of the incoming plastics melt is substantially equal to the flow speed of the exiting plastics melt; AND/OR wherein
o along the melt flow the sum of the downstream passage diameters is substantially equal to the upstream passage diameters.

8. Melt distributor according to one of the preceding claims, wherein a trouser-like melt passage (5.1, 5.2, 5.3) has a uniform passage overall diameter along the melt flow, and therefore there is a uniform flow speed within the trouser-like melt passage (5.1, 5.2, 5.4).

9. Melt distributor according to one of the preceding claims, wherein the curvature in each length region of the trouser-like melt passage (5.1, 5.2, 5.3) is selected in such a way that the ratio of the local radius of curvature to the local diameter of the passage is greater than or equal to a minimum ratio limit value, wherein the minimum ratio limit value is greater than 2.5 and in particular has the value 3.

10. Assembly comprising an extrusion head, in particular a multi-layer extrusion head, and a melt distributor according to one of Claims 1 to 9.

11. Multiple extrusion head for simultaneous production of multiple multi-layer preforms, comprising multiple assemblies according to Claim 10 or a melt distributor according to one of Claims 1 to 9 in which multiple adjacent groups of trouser-like melt passages are provided.

## Revendications

1. Distributeur de matière fondue (1) permettant de réorienter et de partager de la matière fondue à partir d'une matière thermoplastique, dans lequel le distributeur de matière fondue (1) peut être relié à une tête d'extrusion multicouche pour fabriquer des préformes multicouches à partir de la matière fondue des plusieurs flux de matière fondue, et dans lequel le distributeur de matière fondue (1) comprend plusieurs passages de matière fondue de type pantalon (5.1, 5.2, 5.3) et au moins un ou chaque passage de matière fondue de type pantalon
- présente une partie de passage d'alimentation (6) ainsi qu'au moins deux parties de passage d'évacuation (7.1, 7.2), et
- une jonction ramifiée (8) est prévue entre la partie de passage d'alimentation (6) et les parties de passage d'évacuation (7.1, 7.2), et
- la partie de passage d'alimentation (6) présente côté extrémité une entrée (9) pour la matière fondue et chaque partie de passage d'évacuation (7.1, 7.2) d'un passage de matière fondue de type pantalon (5.1, 5.2, 5.3) présente côté extrémité une sortie (10) pour la matière fondue,
- et dans lequel au moins la jonction ramifiée (8) est configurée comme une bifurcation de conduit en forme de Y arrondie, et dans lequel la jonction ramifiée (8) suit entre la partie de passage d'alimentation (6) et les deux parties de passage d'évacuation (7.1, 7.2) reliées une courbe curviligne continue dont la courbure est différente de zéro,
- **caractérisé en ce que** le distributeur de matière fondue (1) est réalisé sous la forme d'un composant monobloc (2) et tous les passages de matière fondue de type pantalon (5.1, 5.2, 5.3) sont disposés dans le composant monobloc (2), et dans lequel le composant monobloc muni des passages de matière fondue de type pantalon (5.1, 5.2, 5.3) est fabriqué par un procédé de fabrication additive sans forme pour des matières métalliques.

2. Distributeur de matière fondue (1) permettant de réorienter et de partager de la matière fondue à partir d'une matière thermoplastique,
dans lequel le distributeur de matière fondue (1) peut être relié à une tête d'extrusion multicouche pour fabriquer des préformes multicouches à partir de la matière fondue des plusieurs flux de matière fondue, et dans lequel le distributeur de matière fondue (1) comprend plusieurs passages de matière fondue de type pantalon (5.1, 5.2, 5.3) et au moins un ou chaque passage de matière fondue de type pantalon
- présente une partie de passage d'alimentation (6) ainsi qu'au moins deux parties de passage d'évacuation (7.1, 7.2), et
- une jonction ramifiée (8) est prévue entre la partie de passage d'alimentation (6) et les parties de passage d'évacuation (7.1, 7.2), et
- la partie de passage d'alimentation (6) présente côté extrémité une entrée (9) pour la matière fondue et chaque partie de passage d'évacuation (7.1, 7.2) d'un passage de matière fondue de type pantalon (5.1, 5.2, 5.3) présente côté extrémité une sortie (10) pour la matière fondue,
- et dans lequel au moins la jonction ramifiée (8) est configurée comme une bifurcation de conduit en forme de Y arrondie, et dans lequel la jonction ramifiée (8) suit entre la partie de passage d'alimentation (6) et les deux parties de passage d'évacuation (7.1, 7.2) reliées une courbe curviligne continue dont la courbure est différente de zéro,
- **caractérisé en ce que** le distributeur de matière fondue (1) présente deux ou plusieurs segments annulaires (20.1, 20.2, 20.3) sous la forme de composants séparés et monoblocs en soi, dans lequel l'un des passages de matière fondue de type pantalon (5.1, 5.2, 5.3) avec la jonction ramifiée et le tracé de courbure continu est réalisé dans au moins un segment annulaire (20.1, 20.2, 20.3), et dans lequel
o chacun des passages de matière fondue de type pantalon (5.1, 5.2, 5.3) est disposé dans un segment annulaire (20.1, 20.2, 20.3) séparé réalisé sous la forme d'un composant monobloc du distributeur de matière fondue (1) ; OU
o un sous-groupe des passages de matière fondue de type pantalon (5.1, 5.2, 5.3) est disposé dans un segment annulaire (20.1, 20.2, 20.3), réalisé sous la forme d'un composant monobloc, du distributeur de matière fondue (1) ;
- et dans lequel le composant monobloc avec les passages de matière fondue de type pantalon (5.1, 5.2, 5.3) est fabriqué par un procédé de fabrication additive sans forme pour des matières métalliques.

3. Distributeur de matière fondue selon la revendication 1 ou 2, dans lequel les longueurs d'arc des courbes curvilignes présentent à la jonction ramifiée (8) un angle au centre (W) de moins de 90°.

4. Distributeur de matière fondue selon la revendication 1, 2 ou 3, dans lequel
- la jonction (8) d'un passage de matière fondue de type pantalon (5.1, 5.2, 5.3) est suivie d'une section montante (18) de la partie de passage d'alimentation (6), et/ou
- dans lequel la jonction ramifiée (8) est suivie respectivement d'une section descendante (19) des parties de passage d'évacuation (7.1, 7.2), ET dans lequel
- la section montante (18) ou les sections descendantes (19) suivent également une courbe curviligne continue dont la courbure est différente de zéro.

5. Distributeur de matière fondue selon l'une quelconque des revendications 1 à 4, dans lequel plusieurs entrées (9) des plusieurs passages de matière fondue de type pantalon (5.1, 5.2 5.3) se trouvent sur une ligne droite (12) du côté entrée (3) du distributeur de matière fondue (1), et/ou dans lequel plusieurs ou toutes les sorties (10) de la tuyauterie de type pantalon (5.1, 5.2, 5.3) se trouvent sur une ligne droite (13) du côté sortie (4) du distributeur de matière fondue (1).

6. Distributeur de matière fondue selon l'une quelconque des revendications précédentes, dans lequel toutes les entrées (9) sont disposées sur un côté entrée (3) du distributeur de matière fondue (1), et/ou toutes les sorties (10) sont disposées sur un côté sortie opposée (4) du distributeur de matière fondue (1) .

7. Distributeur de matière fondue selon l'une quelconque des revendications précédentes, dans lequel le passage de matière fondue de type pantalon (5.1, 5.2, 5.3)
- présente des diamètres de passage situés en aval, en particulier un diamètre de sortie des parties de passage d'évacuation (7.1, 7.2) et/ou des sorties (10), ET
- présente des diamètres de passage situés en amont, en particulier un diamètre d'entrée de la partie de passage d'alimentation (6) et/ou de l'entrée (9), ET dans lequel
o le rapport entre les diamètres situés en aval et les diamètres situés en amont est sélectionné de telle sorte que la vitesse d'écoulement de la matière plastique fondue entrante est substantiellement égale à la vitesse d'écoulement de la matière plastique fondue sortante ; ET/OU dans lequel
o le long du flux de matière fondue, la somme des diamètres de passage situés en aval est substantiellement égale aux diamètres de passage situés en amont.

8. Distributeur de matière fondue selon l'une quelconque des revendications précédentes, dans lequel un passage de matière fondue de type pantalon (5.1, 5.2, 5.3) présente le long du flux de matière fondue un diamètre total de passage uniforme de sorte qu'une vitesse d'écoulement uniforme règne à l'intérieur du passage de matière fondue de type pantalon (5.1, 5.2, 5.4) .

9. Distributeur de matière fondue selon l'une quelconque des revendications précédentes, dans lequel la courbure dans chaque zone de longueur du passage de matière fondue de type pantalon (5.1, 5.2, 5.3) est sélectionnée de telle sorte que le rapport entre le rayon de courbure local et le diamètre local du passage est supérieur ou égal à une valeur limite de rapport minimale, la valeur de rapport minimale étant inférieure à 2,5 et présentant en particulier une valeur de 3.

10. Sous-ensemble, comprenant une tête d'extrusion, en particulier une tête d'extrusion multicouche, et un distributeur de matière fondue selon l'une quelconque des revendications 1 à 9.

11. Tête d'extrusion multiple pour la fabrication simultanée de plusieurs préformes multicouches, comprenant plusieurs sous-ensembles selon la revendication 10 ou un distributeur de matière fondue selon l'une quelconque des revendications 1 à 9 dans lequel plusieurs groupes voisins de passages de matière fondue de type pantalon sont prévus.
